# EUROPEAN PATENT APPLICATION

(11) **EP 2 034 483 A1**
(43) Date of publication of application: **11.03.2009**
(21) Application number: 06833500.9
(22) Date of filing: 28.11.2006
(51) Int. Cl.: G11B 20/12, H04N 5/92, H04N 7/26

(54) **FORMAT CONVERTER, FORMAT CONVERTING METHOD, AND MOVING IMAGE DECODING SYSTEM**

(30) Priority: 26.06.2006 JP 2006175459
(71) Applicant: Panasonic Corporation, Kadoma-shi Osaka 571-8501 (JP)
(72) Inventor: MIZUGUCHI, Noboru, 2-1-61, Shiromi, Chuo-ku Osaka 540-6207 (JP); WATABE, Akihiro, 2-1-61, Shiromi, Chuo-ku Osaka 540-6207 (JP)
(74) Representative: Grünecker, Kinkeldey, Stockmair & Schwanhäusser Anwaltssozietät
(86) International application number: PCT/JP2006/323696
(87) International publication number: WO 2008/001478

(57) **Abstract**

A format converter for converting the format of input contents data from a first format standard to a second format standard includes an extraction section (**30**), a judgment section (**40**), a determination section (**60**) and a conversion section (**70**). The extraction section (**30**) extracts information related to encoding of the input contents data. The judgment section (**40**) judges whether or not the contents data satisfies a constraint placed by the second format standard based on the extracted information. The determination section (**60**) determines whether or not decoding of the contents data is necessary for the format conversion based on the judgment result. The conversion section (**70**) performs the format conversion by converting data structure when it is determined that the decoding is unnecessary.

## Description

### TECHNICAL FIELD

The present invention relates to a format conversion technology. In particular, it relates to a format conversion technology for recording contents data on a recording medium.

### BACKGROUND ART

With an increase in capacity of optical recording media, a technology for recording whole data of a film or the like on a DVD (Digital Versatile Disc) and reproducing the data has become popular. In general, from the viewpoint of easy real-time recording, a video recording standard is adopted for recording data on the optical recording medium and format conversion into a DVD video standard is performed for reproduction of the data. So far, there has been proposed a format converter for generating contents data conforming to the DVD video standard while maintaining an encoding scheme of any one of audio information, video information and data contained in contents data conforming to the video recording standard (e.g., see Patent Literature 1). According to the proposed format converter, the contents data conforming to the video recording standard is converted into contents data conforming to the DVD video standard without reproducing it as continuous contents data.

As to recording and reproduction of a film distributed through digital satellite broadcasting on and from an optical recording medium such as a DVD, the recording is performed by directly converting a transport stream (hereinafter may be referred to as "TS") of Information technology-Generic coding of moving pictures and associated audio information: Systems (ISO/IEC 13818-1) used for the digital satellite broadcasting into a program stream (hereinafter may be referred to as "PS") conforming to the DVD video standard. An encoding scheme of video data contained in the contents data of the TS (hereinafter may be referred to as "video elementary") and an encoding scheme of the video elementary of the PS both conform to Information technology-Generic coding of moving pictures and associated audio information: Video (ISO/IEC 13818-2). The video elementary conforming to ISO/IEC 13818-2 is constituted of a series of video frames. Each of the video frames is any one of three kinds of frames, I picture, B picture and P picture. A GOP, a set of video frames, is constituted of video frames from the I picture to a video frame immediately preceding the next I picture.
Patent Literature 1: Japanese Unexamined Patent Publication No. 2003-242721

### DISCLOSURE OF THE INVENTION

According to the DVD video standard, a constraint is placed on the data structure of the video elementary. Specifically, the number of video frames contained in the GOP is limited to not larger than 18. However, in some cases, the structure of the video elementary of the digital satellite broadcasting does not satisfy the constraint. Therefore, it is necessary to reproduce the video elementary of the TS distributed through the digital satellite broadcasting, re-encode it as a video elementary conforming to the DVD video standard and then convert it into the video elementary of the PS. This format conversion is time-consuming and is not preferable. Further, as every video elementary is once reproduced before the re-encoding, image quality may deteriorate.

In light of the above-described problem, an object of the present invention is to achieve a format conversion technology capable of performing format conversion at enhanced speed and providing high quality data. Further, the present invention is also intended to provide a moving picture decoding system including an apparatus for executing the format conversion.

### MEANS OF SOLVING THE PROBLEM

In order to solve the problem, the present invention provides a format converter for performing format conversion of first contents data conforming to a first format standard into second contents data conforming to a second format standard, the format converter including: an extraction section for extracting information related to encoding of the first contents data from the first contents data; a judgment section for judging whether or not the first contents data satisfies a constraint placed by the second format standard based on the information extracted by the extraction section; a determination section for determining whether or not decoding of the first contents data is necessary for the format conversion based on the judgment result of the judgment section; and a conversion section for performing the format conversion by converting data structure when the determination section determines that the decoding is unnecessary.

With this configuration, the conversion section performs the format conversion by converting the data structure only after the extraction section extracts the information related to the encoding of the first contents data, the judgment section judges whether or not the first contents data satisfies the constraint placed by the second format standard based on the extracted information and the determination section determines that the decoding of the first contents data is unnecessary for the format conversion based on the judgment result. Therefore, when the first contents data satisfies the constraint of the second format standard, the format conversion is performed without decoding the first contents data. As a result, the speed of the format conversion is enhanced and video quality does not deteriorate.

More specifically, the first contents data contains video data, the extraction section extracts information related to encoding of the video data, the judgment section judges whether or not the video data satisfies the constraint based on the information related to the encoding of the video data extracted by the extraction section and the determination section determines that decoding of the video data is unnecessary when the judgment section judges that the video data satisfies the constraint.

More specifically, the first contents data contains audio data, the extraction section extracts information related to encoding of the audio data, the judgment section judges whether or not the audio data satisfies the constraint based on the information related to the encoding of the audio data extracted by the extraction section and the determination section determines that decoding of the audio data is unnecessary when the judgment section judges that the audio data satisfies the constraint.

More specifically, the first contents data contains video data and audio data, the extraction section extracts information related to encoding of the video data and information related to encoding of the audio data, the judgment section judges whether or not each of the video data and the audio data satisfies the constraint based on the information related to the encoding of the video data and the information related to the encoding of the audio data and the determination section determines that decoding of the video data and the audio data is unnecessary when the judgment section judges that both of the video data and the audio data satisfy the constraint.

Preferably, the format converter further includes a buffer for temporarily storing the judgment result of the judgment section, wherein the determination section determines whether or not the decoding of the first contents data is necessary when the amount of the judgment result stored in the buffer reaches a predetermined amount.

With this configuration, a determination as to whether or not the decoding of the first contents data is necessary is made on the basis of a desired amount of the judgment result.

Preferably, the format converter further includes a calculation section for calculating time required for the format conversion by the conversion section based on the determination of the determination section and the information related to the encoding extracted by the extraction section.

With this configuration, the calculated time required for the format conversion is informed in advance to a user as need arises.

Preferably, the first contents data contains video data, the extraction section extracts information related to encoding of the video data and the conversion section includes a filtering section for filtering decoded video pictures of the video data and a level setting section for setting the level of the filtering based on the information related to the encoding of the video data extracted by the extraction section.

With this configuration, the decoded video pictures are filtered at a level selected in accordance with the information related to the encoding of the video data. Therefore, noise and high frequency components contained in the decoded video pictures are removed.

The present invention further provides a moving picture decoding system including: the above-described format converter; an output buffer for receiving the second contents data output from the format converter and outputting the second contents data at a predetermined bit rate; a transmission line for transmitting the second contents data output from the output buffer; an input buffer for receiving the second contents data transmitted through the transmission line and outputting the second contents data to be decoded; and a moving picture decoder for decoding the second contents data output from the input buffer.

The present invention further provides a moving picture decoding system including: the above-described format converter; an output buffer for receiving the second contents data output from the format converter and outputting the second contents data at a predetermined bit rate; a recording section for recoding the second contents data output from the output buffer on a recording medium; a reading section for reading the second contents data recorded on the recording medium; an input buffer for receiving the second contents data read by the reading section and outputting the second contents data to be decoded; and a moving picture decoder for decoding the second contents data output from the input buffer.

### EFFECT OF THE INVENTION

According to the present invention, as described above, the format conversion is performed at enhanced speed and high quality data is provided.

### BRIEF DESCRIPTION OF DRAWINGS

FIG. **1** is a diagram illustrating the structure of a format converter according to a first embodiment.
FIG. 2 is a diagram illustrating an example of the structure of a conversion section.
FIG. 3 is a diagram illustrating the structure of a moving picture decoding system according to a second embodiment.
FIG. 4 is a diagram illustrating the structure of a moving picture decoding system according to a third embodiment.

### EXPLANATION OF REFERENCE NUMERALS

- 1: Format converter
- 30: Extraction section
- 40: Judgment section
- 50: Buffer
- 60: Determination section
- 70: Conversion section
- 74: Filtering section
- 77: Level setting section
- 80: Calculation section
- 100, 100': Moving picture decoding system
- 101: Output buffer
- 102: Transmission line
- 103: Input buffer
- 104: Moving picture decoder
- 107: Recording section
- 108: Reading section

### BEST MODE FOR CARRYING OUT THE INVENTION

Hereinafter, preferred embodiments of the present invention will be explained with reference to the drawings.

### (First Embodiment)

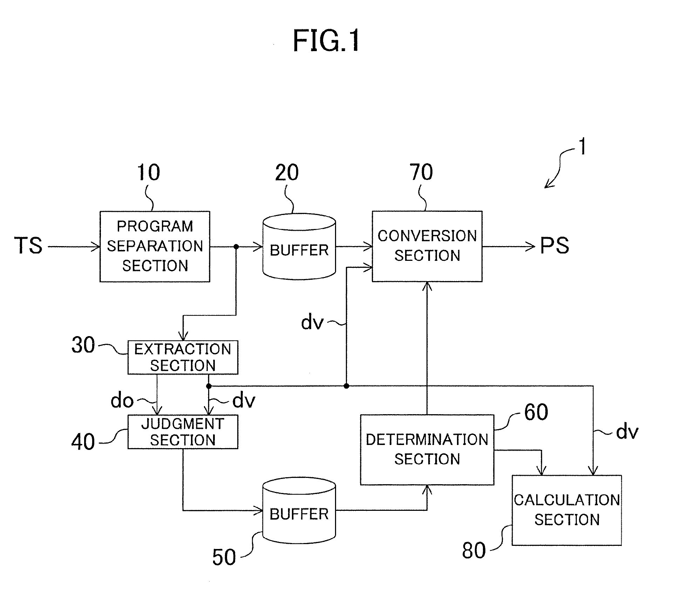

FIG. 1 illustrates the structure of a format converter according to a first embodiment. The format converter 1 includes a program separation section 10, buffers 20 and 50, an extraction section 30, a judgment section 40, a determination section 60, a conversion section 70 and a calculation section 80. For the sake of easy explanation, it is assumed that a first format standard is TS and a second format standard is PS conforming to a DVD video standard. The format converter **1** performs format conversion of contents data of the TS used for digital satellite broadcasting into contents data of the PS conforming to the DVD video standard and then records the data on an optical recording medium (not shown). The TS contains a program A and a program B as the contents data and the program A is recorded on the optical recording medium (not shown).

The program separation section **10** separates the program A to be recorded on the optical recording medium (not shown) from the set of programs A and B contained in the TS. More specifically, from a plurality of TS packets that compose the TS, TS packets each containing a video elementary and an audio elementary of the program A are extracted with reference to a pack ID contained in each of the TS packets. According to the standard of the TS, the same pack ID is given to the TS packets multiplexed with elementaries related to the same program. The program separation section 10 separates the program A by extracting the TS packets each having the pack ID corresponding to the program A. The TS packets of the program A separated by the program separation section **10** are temporarily stored in the buffer **20**.

The extraction section **30** extracts information **dv** related to the encoding of the video elementary contained in the TS packet of the program A from the video elementary and extracts information **do** related to the encoding of the audio elementary contained in the TS packet of the program A from the audio elementary. More specifically, the extraction section **30** extracts, from every GOP, the number of frames contained in the GOP (hereinafter referred to as "GOP_N") as the information **dv** based on the type of picture added to the header of the video frame of the TS packet multiplexed with the video elementary of the program A. Further, the extraction section **30** extracts an audio mode added to the header of the audio frame of the TS packet multiplexed with the audio elementary of the program A as the information **do**.

The judgment section **40** judges whether or not each of the video elementary and the audio elementary satisfies a constraint of the DVD video standard based on the information **dv** and the information **do** extracted by the extraction section 30. For instance, an example of the constraint on the audio elementary is that the audio elementary should not be encoded in a dual monaural mode. The constraint on the video elementary is as described above. More specifically, when GOP_N contained in the information dv is not larger than 18, the judgment section **40** judges that the corresponding video frame satisfies the constraint. On the other hand, when GOP_N is larger than 18, the corresponding video frame is judged as not satisfying the constraint. Likewise, when the audio mode contained in the information do is not the dual monaural mode, the judgment section **40** judges that the corresponding audio frame satisfies the constraint. On the other hand, when the audio mode is the dual monaural mode, the judgment section **40** judges that the corresponding audio frame does not satisfy the constraint. The judgment results of the judgment section 40 are temporarily stored in the buffer **50**.

When a predetermined amount of the judgment results is stored in the buffer **50**, the determination section **60** determines whether or not decoding of the TS packet stored in the buffer **20** is necessary for the format conversion based on the judgment results. For example, suppose that the judgment results stored in the predetermined amount in the buffer **50** are the judgment results related to the whole TS packets contained in the program A, and when the whole judgment results as to the video elementary stored in the buffer **50** indicate that "the constraint is satisfied", the determination section **60** determines that the decoding of the video elementary contained in the TS packet is unnecessary for the format conversion. On the other hand, when any of the judgment results indicates that "the constraint is not satisfied", the determination section **60** determines that the decoding of the video elementary contained in the TS packet is necessary for the format conversion. The determination section **60** determines whether or not the decoding of the audio elementary contained in the TS packet is necessary for the format conversion in the same manner as the determination as to the video elementary.

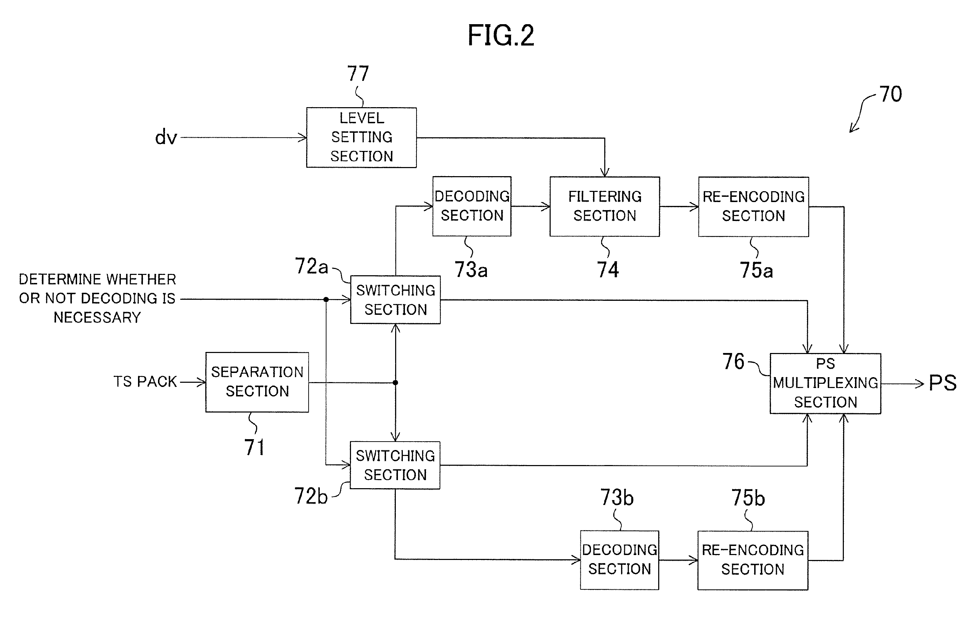

The conversion section **70** performs format conversion of the TS packet stored in the buffer **20** into PS in accordance with the determination made by the determination section **60**. FIG. **2** shows an example of the structure of the conversion section **70**. The conversion section **70** includes a separation section **71**, switching sections **72a** and **72b**, decoding sections **73a** and **73b**, a filtering section **74**, re-encoding sections **75a** and **75b**, a PS multiplexing section **76** and a level setting section **77**.

The separation section **71** separates the video elementary and the audio elementary from the TS packet of the program A. The switching section **72a** switches the destination of the video elementary separated by the separation section **71** in accordance with the determination made by the determination section **60**. More specifically, the switching section **72a** outputs the video elementary to the decoding section **73a** when the determination section **60** determines that the decoding of the video elementary is necessary for the format conversion. On the other hand, the switching section **72a** outputs the video elementary to the PS multiplexing section **76** when it is determined that the decoding is unnecessary. The switching section **72b** switches the destination of the audio elementary separated by the separation section **71** in accordance with the determination of the determination section **60**. More specifically, the switching section **72b** outputs the audio elementary to the decoding section **73b** when the determination section **60** determines that the decoding of the audio elementary is necessary for the format conversion. On the other hand, the switching section **72b** outputs the audio elementary to the PS multiplexing section **76** when it is determined that the decoding is unnecessary.

The decoding section **73a** decodes the video elementary output from the switching section **72a** into pictures of ITU-RBT. 656 format, for example. The decoding section **73b** decodes the audio elementary output from the switching section **72b** into linear PCM audio, for example. The filtering section **74** may be, for example, a lowpass filter for filtering the pictures decoded by the decoding section **73a**. The cutoff frequency of the filtering section **74** is variable.

The re-encoding section **75a** re-encodes the pictures filtered by the filtering section **74** into a video elementary conforming to the DVD video standard. The re-encoding section **75b** re-encodes the audio decoded by the decoding section **73b** into an audio elementary conforming to the DVD video standard. The PS multiplexing section **76** multiplexes the video elementary output from the switching section **72a** or the re-encoding section **75a** and the audio elementary output from the switching section **72b** or the re-encoding section **75b** to generate PS conforming to the DVD video standard.

The level setting section **77** sets the cutoff frequency of the filtering section **74** based on the information **dv**. More specifically, the level setting section **77** sets the cutoff frequency lower as GOP_N contained in the information **dv** is larger. That is, the filtering level of the filtering section **74** becomes higher with the increase of GOP_N.

Referring again to FIG. **1**, the calculation section **80** calculates format conversion time required for the format conversion performed by the conversion section **70** based on the information **dv** and the determination of the determination section **60**. More specifically, when the determination section **60** determines that the decoding of the video elementary is necessary for the format conversion, the calculation section **80** calculates a product of a total sum of GOP_N and the video frame cycle as the format conversion time. On the other hand, when it is determined that the decoding is unnecessary, the calculation section **80** multiplies a product of the total sum of GOP_N and the video frame cycle by a coefficient (conversion speed of the format conversion after decoding and re-encoding / conversion speed of the format conversion after decoding and re-encoding) to calculate the format conversion time.

According to the present embodiment, when one of the video elementary and the audio elementary of a program to be recorded satisfies the constraint of the DVD video standard, the data structure of the elementary satisfying the constraint is directly changed for the format conversion. Therefore, the format conversion time is reduced and video quality does not deteriorate. Further, even when the video elementary needs to be decoded, decoded video pictures are filtered first and then re-encoded. Therefore, noise and high frequency components contained in the decoded video picture are removed and noise involved in the re-encoding, such as block noise, is reduced.

If the necessity of the decoding for the format conversion is determined with respect to each TS packet, the buffer **50** may be omitted. In this case, the calculation section **80** adds the conversion time of the total sum of GOP_N to be decoded and that of the total sum of GOP_N not to be decoded to calculate the format conversion time. By so doing, the decoding is performed for only the video elementary or the audio elementary of the TS packet that does not satisfy the constraint. Therefore, the format conversion time is further reduced and the video quality deterioration is reduced to the minimum level. Further, the format conversion of received TS is performed with a small time difference. Moreover, since the decoded video pictures are filtered first and then re-encoded for the format conversion, noise involved in the re-encoding, such as block noise, is reduced. As a result, image quality is less likely to vary between the decoded portion and the non-decoded portion, thereby providing a visually preferable video.

When both of the information **dv** and the information **do** are judged as "satisfying the constraint" by the judgment section **40**, the determination section **60** may determine that the decoding of the video elementary and the audio elementary is unnecessary for the format conversion.

If it is clear that TS to be input contains only a single program, the program separation section **10** may be omitted. The filtering section **74** and the level setting section **77** may also be omitted. If there is no particular need of informing a user of time required for the format conversion, the calculation section **80** may be omitted. The TS packet may contain either one of the video elementary and the audio elementary.

The encoding scheme for the video elementary is not limited to ISO/IEC 13818-2. For example, other encoding schemes including variable-length encoding, such as ISO/IEC 14496-2 Final Draft International Standard MPEG-4 Visual, may also be used.

The format conversion is not limited to that of TS to PS. For example, the format conversion may be performed between formats multiplexed with encoded video and audio elementaries, such as format conversion of TS to ASF.

### (Second Embodiment)

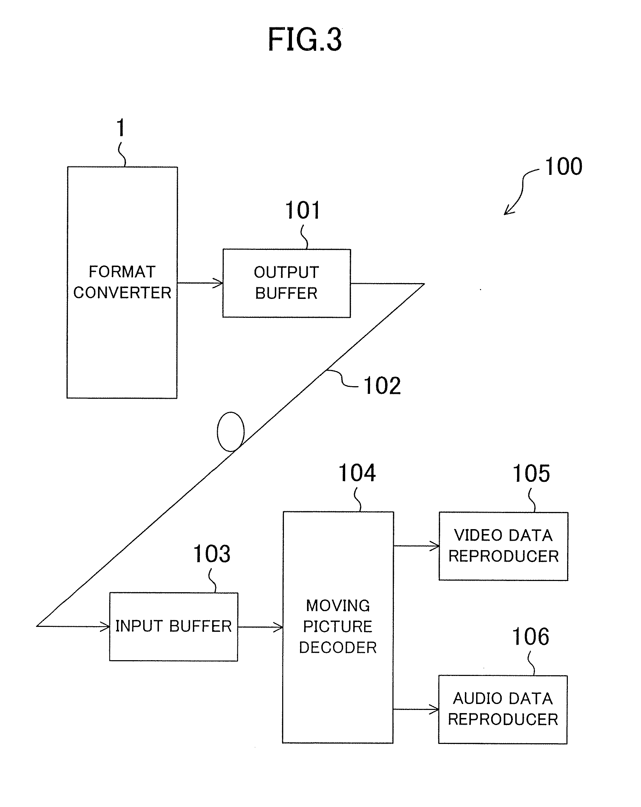

FIG. **3** shows the structure of a moving picture decoding system according to a second embodiment. The moving picture decoding system **100** includes the format converter **1** shown in FIG. **1**, an output buffer **101**, a transmission line **102**, an input buffer **103**, a moving picture decoder **104**, a video data reproducer **105** and an audio data reproducer **106**.

The format converter **1** is constituted as described above. In particular, the format converter **1** generates PS multiplexed with video data and audio data in consideration of the moving picture decoder **104** (decoder model). The output buffer 101 outputs the PS delivered from the format converter **1** at a predetermined bit rate. The PS delivered from the output buffer **101** is transmitted through the transmission line **102** to the input buffer **103**. The input buffer **103** receives the PS and outputs it upon request of the moving picture decoder **104**. The moving picture decoder **104** separates the supplied PS into coded video data and coded audio data, and then decodes the coded video data into video data and the coded audio data into audio data. The video data reproducer **105** and the audio data reproducer **106** reproduce the video data and the audio data decoded by the moving picture decoder **104**, respectively.

### (Third Embodiment)

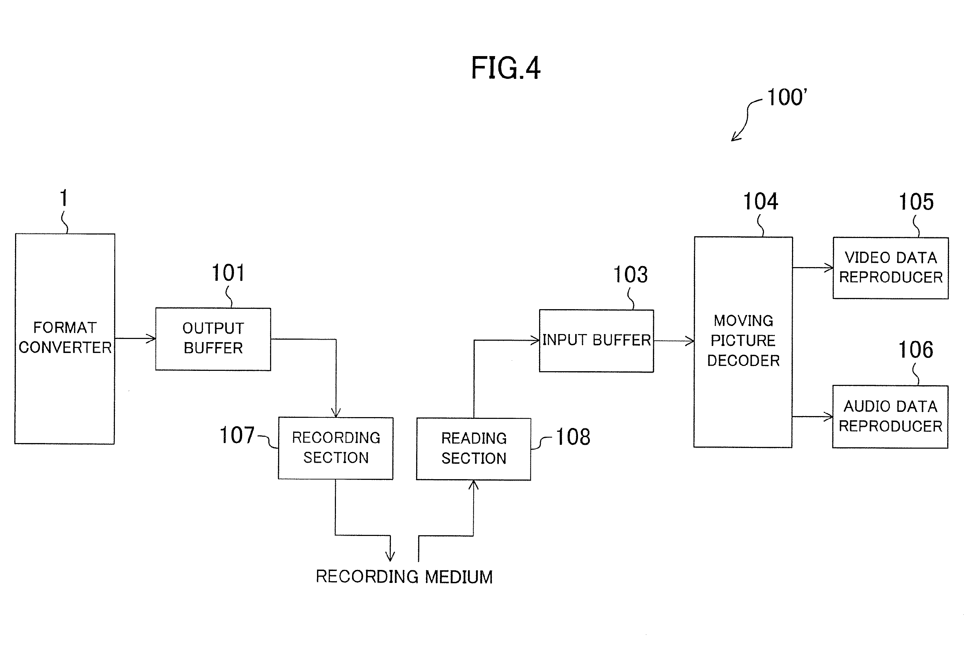

FIG. **4** shows the structure of a moving picture decoding system according to a third embodiment. Components having the same functions as those of the moving picture decoding system shown in FIG. 3 are indicated by the same reference numerals to omit overlapping explanation. The moving picture decoding system **100**' of the present embodiment includes the format converter **1** shown in FIG. **1**, an output buffer **101**, an input buffer **103**, a moving picture decoder 104, a video data reproducer **105**, an audio data reproducer **106**, a recording section **107** and a reading section **108**. The recording section **107** records PS delivered from the output buffer **101** on a recording medium. The reading section **108** reads the PS recorded on the recording medium. With this configuration, the moving picture decoding system **100**' is able to record and read the PS on and from the recording medium, such as a memory, a magnetic disc and an optical disc.

### INDUSTRIAL APPLICABILITY

The format converter according to the present invention is able to perform format conversion at enhanced speed. Therefore, the format converter is useful for format conversion of a large volume of data.

## Claims

1. A format converter for performing format conversion of first contents data conforming to a first format standard into second contents data conforming to a second format standard, the format converter comprising:
an extraction section for extracting information related to encoding of the first contents data from the first contents data;
a judgment section for judging whether or not the first contents data satisfies a constraint placed by the second format standard based on the information extracted by the extraction section;
a determination section for determining whether or not decoding of the first contents data is necessary for the format conversion based on the judgment result of the judgment section; and
a conversion section for performing the format conversion by converting data structure when the determination section determines that the decoding is unnecessary.

2. The format converter of Claim 1, wherein
the first contents data contains video data,
the extraction section extracts information related to encoding of the video data,
the judgment section judges whether or not the video data satisfies the constraint based on the information related to the encoding of the video data extracted by the extraction section and
the determination section determines that decoding of the video data is unnecessary when the judgment section judges that the video data satisfies the constraint.

3. The format converter of Claim 1, wherein
the first contents data contains audio data,
the extraction section extracts information related to encoding of the audio data,
the judgment section judges whether or not the audio data satisfies the constraint based on the information related to the encoding of the audio data extracted by the extraction section and
the determination section determines that decoding of the audio data is unnecessary when the judgment section judges that the audio data satisfies the constraint.

4. The format converter of Claim 1, wherein
the first contents data contains video data and audio data,
the extraction section extracts information related to encoding of the video data and information related to encoding of the audio data,
the judgment section judges whether or not each of the video data and the audio data satisfies the constraint based on the information related to the encoding of the video data and the information related to the encoding of the audio data and
the determination section determines that decoding of the video data and the audio data is unnecessary when the judgment section judges that each of the video data and the audio data satisfies the constraint.

5. The format converter of Claim 1 further comprising
a buffer for temporarily storing the judgment result of the judgment section, wherein
the determination section determines whether or not the decoding of the first contents data is necessary when the amount of the judgment result stored in the buffer reaches a predetermined amount.

6. The format converter of Claim 1 further comprising
a calculation section for calculating time required for the format conversion by the conversion section based on the determination of the determination section and the information related to the encoding extracted by the extraction section.

7. The format conversion of Claim 1, wherein
the first contents data contains video data,
the extraction section extracts information related to encoding of the video data and
the conversion section includes a filtering section for filtering decoded video pictures of the video data and a level setting section for setting the level of the filtering based on the information related to the encoding of the video data extracted by the extraction section.

8. A moving picture decoding system comprising:
the format converter of Claim 1 for outputting multiplexed data;
an output buffer for receiving the multiplexed data output from the format converter and outputting the multiplexed data at a predetermined bit rate;
a transmission line for transmitting the multiplexed data output from the output buffer;
an input buffer for receiving the multiplexed data transmitted through the transmission line and outputting the multiplexed data to be decoded; and
a moving picture decoder for decoding the multiplexed data output from the input buffer.

9. A moving picture decoding system comprising:
the format converter of Claim 1 for outputting multiplexed data;
an output buffer for receiving the multiplexed data output from the format converter and outputting the multiplexed data at a predetermined bit rate;
a recording section for recoding the multiplexed data output from the output buffer on a recording medium;
a reading section for reading the multiplexed data recorded on the recording medium;
an input buffer for receiving the multiplexed data read by the reading section and outputting the multiplexed data to be decoded; and
a moving picture decoder for decoding the multiplexed data output from the input buffer.

10. A method for performing format conversion of first contents data conforming to a first format standard into second contents data conforming to a second format standard, the method comprising:
an extraction step of extracting information related to encoding of the first contents data from the first contents data;
a judgment step of judging whether or not the first contents data satisfies a constraint placed by the second format standard based on the information extracted in the extraction step;
a determination step of determining whether or not decoding of the first contents data is necessary for the format conversion based on the judgment result obtained in the judgment step; and
a conversion step of performing the format conversion by converting data structure when it is determined that the decoding is unnecessary in the determination step.

11. The format conversion method of Claim 10, wherein
the first contents data contains video data,
information related to encoding of the video data is extracted in the extraction step, a judgment as to whether or not the video data satisfies the constraint is made in
the judgment step based on the information related to the encoding of the video data extracted in the extraction step and
a determination that the decoding of the video data is unnecessary is made in the determination step when it is judged that the video data satisfies the constraint in the judgment step.

12. The format conversion method of Claim 10, wherein
the first contents data contains audio data,
information related to encoding of the audio data is extracted in the extraction step,
a judgment as to whether or not the audio data satisfies the constraint is made in the judgment step based on the information related to the encoding of the audio data extracted in the extraction step and
a determination that the decoding of the audio data is unnecessary is made in the determination step when it is judged that the audio data satisfies the constraint in the judgment step.

13. The format conversion method of Claim 10, wherein
the first contents data contains video data and audio data,
information related to encoding of the video data and information related to encoding of the audio data are extracted in the extraction step,
a judgment as to whether or not each of the video data and the audio data satisfies the constraint is made in the judgment step based on the information related to the encoding of the video data and the information related to the encoding of the audio data extracted in the extraction step and
a determination that the decoding of the video data and the audio data is unnecessary is made in the determination step when it is judged that each of the video data and the audio data satisfies the constraint in the judgment step.

14. The format conversion method of Claim 10 further comprising
a storage step of temporarily storing the judgment result obtained in the judgment step in a buffer, wherein
a determination as to whether or not the decoding of the first contents data is necessary is made in the determination step when the amount of the judgment result stored in the buffer reaches a predetermined amount.

15. The format conversion method of Claim 10 further comprising
a conversion time calculation step of calculating time required for the format conversion in the conversion step based on the determination made in the determination step and the information related to the encoding extracted in the extraction step.

16. The format conversion method of Claim 10, wherein
the first contents data contains video data,
information related to encoding of the video data is extracted in the extraction step and
the conversion step includes a step of filtering decoded video pictures of the video data and a step of setting the level of the filtering based on the information related to the encoding of the video data extracted in the extraction step.
